(19) Europäisches Patentamt
European Patent Office
Office européen des brevets

(11) Veröffentlichungsnummer : **0 569 329 A1**

# (12) EUROPÄISCHE PATENTANMELDUNG

(21) Anmeldenummer : **93810305.8**

(51) Int. Cl.[5] : **C09B 31/072**

(22) Anmeldetag : **27.04.93**

(30) Priorität : **05.05.92 CH 1437/92**

(43) Veröffentlichungstag der Anmeldung : **10.11.93 Patentblatt 93/45**

(84) Benannte Vertragsstaaten : **BE CH DE FR GB IT LI**

(71) Anmelder : **CIBA-GEIGY AG**
**Klybeckstrasse 141**
**CH-4002 Basel (CH)**

(72) Erfinder : **Hurter, Rudolf**
**Laufenburgerstrasse 10/3**
**CH-4058 Basel (CH)**

## (54) Azofarbstoffe, Verfahren zu deren Herstellung und deren Verwendung.

(57) Die Erfindung betrifft Azofarbstoffe der Formel

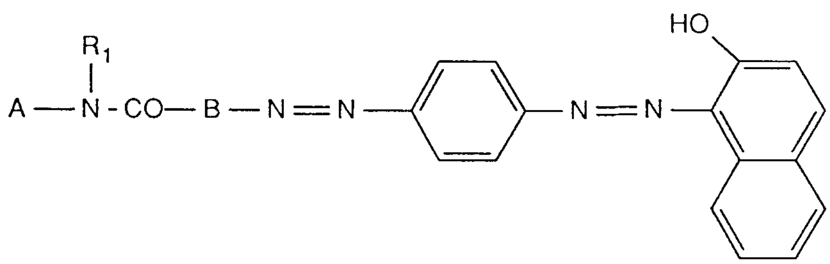

(1),

worin A, B und R, die in Anspruch 1 angegebenen Bedeutungen haben. Die Azofarbstoffe der Formel (1) ergeben auf stickstoffhaltigen oder hydroxylgruppenhaltigen Fasermaterialien, Papier oder Leder Färbungen von guten Echtheiten.

EP 0 569 329 A1

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel

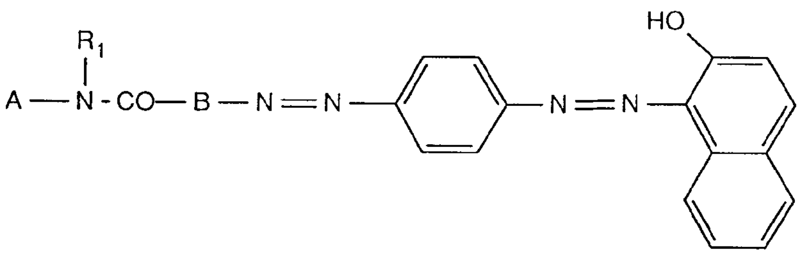

(1),

worin $R_1$ Wasserstoff oder $C_1$-$C_8$-Alkyl, B gegebenenfalls substituiertes Phenylen oder Naphthylen ist und A einen Rest der Formel

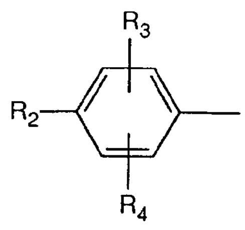

(2),

worin $R_2$, $R_3$ und $R_4$ unabhängig voneinander Wasserstoff, $C_1$-$C_8$-Alkyl, $C_1$-$C_8$-Alkoxy, Halogen, Carboxy oder gegebenenfalls durch $C_1$-$C_4$-Alkyl, $C_1$-$C_4$ -Alkoxy, Halogen, Carboxy oder Sulfo weitersubstituiertes Phenylaminosulfonyl, Naphthylaminosulfonyl, Phenylaminocarbonyl oder Naphthylaminocarbonyl sind und $R_3$ und $R_4$ zusätzlich Sulfo bedeuten können,
oder einen Rest der Formel

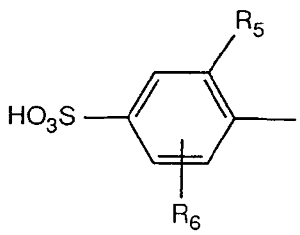

(3),

worin $R_5$ $C_1$-$C_8$-Alkoxy, Halogen, Carboxy oder Sulfo und $R_6$ Wasserstoff, $C_1$-$C_8$-Alkyl, $C_1$-$C_8$-Alkoxy, Halogen, Carboxy oder Sulfo ist,
oder einen Rest der Formel

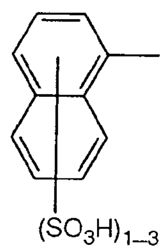

(4)

oder einen Rest der Formel

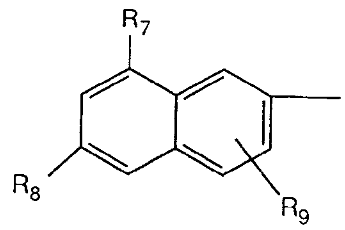

(5),

worin $R_7$, $R_8$ und $R_9$ unabhängig voneinander Wasserstoff oder Sulfo sind, bedeutet.

Als Substituenten des Restes B kommen z.B. Alkylgruppen mit 1 bis 8, vorzugsweise 1 bis 4 Kohlenstoffatomen, wie z.B. Methyl, Aethyl, n-Propyl, Isopropyl, n-Butyl, Isobutyl, sek.-Butyl, tert.-Butyl, Pentyl, Hexyl, Heptyl oder Octyl, Alkoxygruppen mit 1 bis 8 Kohlenstoffatomen, insbesondere 1 bis 4 Kohlenstoffatomen, wie z.B. Methoxy, Aethoxy, n-Propoxy, Isopropoxy, n-Butoxy, Isobutoxy, sek.-Butoxy oder tert.-Butoxy, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Aethoxycarbonylamino, Alkanoylgruppen mit 2 bis 8, vorzugsweise 2 bis 4 Kohlenstoffatomen, wie z.B. Acetyl, Propionyl; Butyryl oder Isobutyryl, Nitro, Cyan, Trifluormethyl, Halogen, wie Fluor, Brom oder insbesondere Chlor, Carbamoyl, Sulfamoyl, Ureido, Hydroxy, Carboxy oder Sulfo in Betracht. Vorzugsweise ist der Rest B unsubstituiert oder durch $C_1$-$C_8$-Alkyl, $C_1$-$C_8$-Alkoxy, Halogen, Carboxy oder Sulfo substituiert.

Als $C_1$-$C_8$-Alkyl kommt für $R_1$, $R_2$, $R_3$, $R_4$ und $R_6$ insbesondere $C_1$-$C_4$-Alkyl, wie Methyl, Aethyl, n-Propyl, Isopropyl, n-Butyl, Isobutyl, sek.-Butyl oder tert.-Butyl in Betracht.

Als $C_1$-$C_8$-Alkoxy kommt für $R_2$, $R_3$, $R_4$, $R_6$ und $R_6$ insbesondere $C_1$-$C_4$-Alkoxy, wie Methoxy, Aethoxy, n-Propoxy, Isopropoxy, n-Butoxy, Isobutoxy, sek.-Butoxy oder tert.-Butoxy in Betracht.

Als Halogen kommt für $R_2$, $R_3$, $R_4$, $R_5$ und $R_6$ z.B. Fluor, Brom oder insbesondere Chlor in Betracht.

$R_2$, $R_3$ und $R_4$ als Phenylaminosulfonyl, Naphthylaminosulfonyl, Phenylaminocarbonyl oder Naphthylaminocarbonyl können unsubstituiert oder z.B. durch $C_1$-$C_4$-Alkyl, wie Methyl, Aethyl, n-Propyl, Isopropyl, n-Butyl, Isobutyl, sek.-Butyl oder tert.-Butyl, $C_1$-$C_4$-Alkoxy, wie Methoxy, Aethoxy, n-Propoxy, Isopropoxy, n-Butoxy, Isobutoxy, sek.-Butoxy oder tert.-Butoxy, Halogen, wie z.B. Fluor, Brom oder insbesondere Chlor, Carboxy oder insbesondere Sulfo substituiert sein.

Die Azofarbstoffe der Formel (1) enthalten vorzugsweise eine oder zwei Sulfogruppen, insbesondere zwei Sulfogruppen.

Bevorzugt sind Azofarbstoffe der Formel (1), worin B gegebenenfalls substituiertes Phenylen, insbesondere gegebenenfalls durch $C_1$-$C_8$-Alkyl, $C_1$-$C_8$-Alkoxy, Halogen, Carboxy oder Sulfo substituiertes Phenylen, ist.

Ebenfalls bevorzugt sind Azofarbstoffe der Formel (1), worin $R_1$ Wasserstoff, Methyl oder Aethyl, insbesondere Wasserstoff, ist.

Als Reste A der Formel (2) sind solche bevorzugt, worin $R_2$ Wasserstoff, Halogen oder gegebenenfalls durch Sulfo weitersubstituiertes Phenylaminosulfonyl, Naphthylaminosulfonyl, Phenylaminocarbonyl oder Naphthylaminocarbonyl ist und $R_3$ und $R_4$ unabhängig voneinander Wasserstoff, Sulfo oder gegebenenfalls durch Sulfo weitersubstituiertes Phenylaminosulfonyl, Naphthylaminosulfonyl, Phenylaminocarbonyl oder Naphthylaminocarbonyl sind.

Besonders bevorzugt als Reste A der Formel (2) sind solche, worin $R_2$ Wasserstoff oder Halogen ist und $R_3$ und $R_4$ unabhängig voneinander Wasserstoff oder Sulfo sind.

Als Reste A der Formel (3) sind solche bevorzugt, worin $R_6$ Halogen, Carboxy oder Sulfo, insbesondere Carboxy, ist und $R_6$ Wasserstoff, Halogen, Carboxy oder Sulfo bedeutet.

Die Reste A der Formel (4) enthalten bevorzugt nur zwei Sulfogruppen.

Als Reste A der Formel (5) sind solche bevorzugt, worin einer der Substituenten $R_7$, $R_8$ und $R_9$ Wasserstoff bedeutet und die beiden anderen Substituenten Sulfo sind, insbesondere, worin $R_9$ Wasserstoff ist und $R_7$ und $R_6$ Sulfo bedeuten.

Die Azofarbstoffe der Formel (1) enthalten bevorzugt einen Rest A der Formel (2), (4) oder (5), insbesondere einen Rest der Formel (4) oder (5). Von besonderem Interesse ist hierbei der Rest A der Formel (5).

Besonders bevorzugt sind Azofarbstoffe der Formel

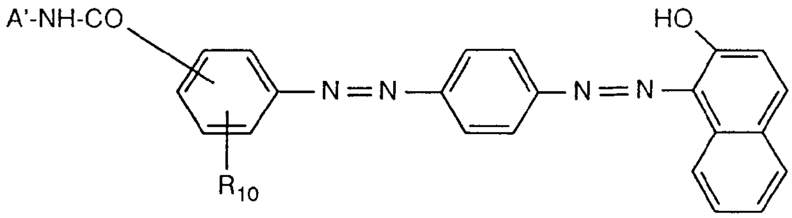

(6),

worin $R_{10}$ Wasserstoff, $C_1$-$C_8$-Alkyl, $C_1$-$C_8$-Alkoxy, Halogen, Carboxy oder Sulfo, insbesondere Wasserstoff oder Methyl, ist und A' einen Rest der Formel

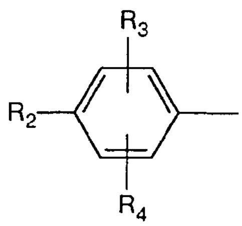

(2),

worin $R_2$ Wasserstoff oder Halogen ist und $R_3$ und $R_4$ unabhängig voneinander Wasserstoff oder Sulfo sind, oder einen Rest der Formel

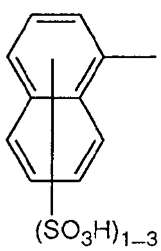

(4)

oder einen Rest der Formel

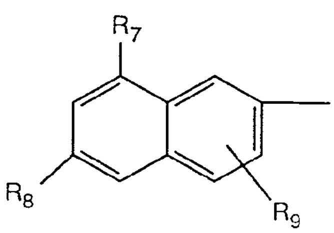

(5),

worin $R_7$, $R_8$ und $R_9$ unabhängig voneinander Wasserstoff oder Sulfo sind, bedeutet.

Besonders bevorzugt sind Azofarbstoffe der Formel (6), worin A' ein Rest der Formel (4) oder (5), insbesondere ein Rest der Formel (5), ist.

Ein weiterer Gegenstand der Erfindung ist ein Verfahren zur Herstellung der erfindungsgemässen Azofarbstoffe, welches dadurch gekennzeichnet ist, dass man ein Amin der Formel

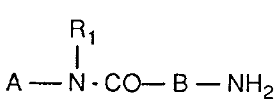

(7),

worin A, B und $R_1$ die unter Formel (1) angegebenen Bedeutungen haben, diazotiert und auf eine Verbindung

der Formel

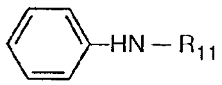

(8),

worin $R_{11}$ Wasserstoff oder $-CH_2-SO_3H$ ist, kuppelt, und das so erhaltene Produkt, falls $R_{11}$ $-CH_2SO_3H$ ist, zur Verbindung der Formel

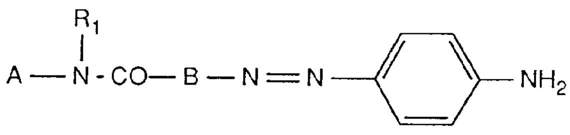

(9)

umsetzt, die Verbindung der Formel (9) diazotiert und auf eine Verbindung der Formel

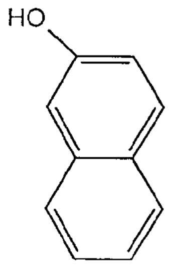

(10)

kuppelt.

Die Diazotierung der Verbindungen der Formeln (7) und (9) erfolgt jeweils in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung auf die Kupplungskomponenten der Formel (8) und (10) erfolgt jeweils in an sich bekannter Weise, bei sauren, neutralen bis schwach alkalischen pH-Werten, insbesondere einem pH-Wert von ca. 5 bis 12, und Temperaturen von beispielsweise -5 bis 70°C, vorzugsweise 10 bis 60°C.

Die Umsetzung des aus der Kupplung der Verbindung der Formel (7) mit der Verbindung der Formel (8) erhaltenen Reaktionsproduktes zur Verbindung der Formel (9) ist nur dann erforderlich, wenn eine Verbindung der Formel (8) verwendet wird, worin $R_{11}$ $-CH_2-SO_3H$ ist. In diesem Falle erfolgt die Umsetzung in Gegenwart einer Base, wie z.B. Natriumhydroxid, bei einer Temperatur von beispielsweise 10 bis 50°C, insbesondere bei einer Temperatur von 20 bis 40°C.

Der Substituent $R_1$ in der Bedeutung als Alkyl kann auch im Anschluss an die Herstellung des Farbstoffes der Formel (1) eingeführt werden, z.B. durch Alkylierung mit Dialkylsulfat, Dialkylcarbonat, Dialkylmethanphosphonat oder Toluolsulfonsäurestermethyl-Derivate, in wässriger Lösung nach an sich bekannter Verfahrensweise.

In dem erfindungsgemässen Verfahren zur Herstellung der Azofarbstoffe der Formel (1) gelten für die Reste A, B und $R_1$ des Amins der Formel (7) jeweils die oben angegebenen Bedeutungen und Bevorzugungen.

Eine bevorzugte Ausführungsform des erfindungsgemässen Verfahrens ist dadurch gekennzeichnet, dass man eine Verbindung der Formel (8) verwendet, worin $R_{11}$ der Rest $-CH_2-SO_3H$ ist und das aus der Kupplung der Verbindung der Formel (7) mit der Verbindung der Formel (8) erhaltene Reaktionsprodukt zur Verbindung der Formel (9) umsetzt.

Eine besonders bevorzugte Ausführungsform des erfindungsgemässen Verfahrens ist dadurch gekennzeichnet, dass man als Amin der Formel (7) ein Amin der Formel

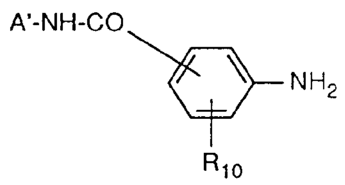

(11)

verwendet, wobei für $R_{10}$ und A' die unter Formel (6) angegebenen Bedeutungen und Bevorzugungen gelten.

Die Amine der Formel (7) und die Verbindungen der Formel (8) sind bekannt oder können in Analogie zu bekannten Verbindungen hergestellt werden.

Die Azofarbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, Papier oder Leder, wie z.B. textilen Fasermaterialien aus Cellulose, Seide und insbesondere Wolle und synthetischen Polyamiden. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen in roten Tönen mit guten Allgemeinechtheiten, insbesondere guter Reib-, Nass-, Nassreib- und Lichtechtheit. Ferner sind die erfindungsgemässen Farbstoffe sehr gut wasserlöslich. Weiterhin zeigen die erfindungsgemässen Farbstoffe ein sehr gutes Aufbauvermögen und sind sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1:

In einem ersten Schritt wird eine Mischung aus 41 Teilen einer 41%-igen wässrigen Natriumhydrogensulfit-Lösung und 13 Teilen einer 37%-igen wässrigen Formaldehyd-Lösung hergestellt, die anschliessend kurze Zeit gerührt und bei 65° mit 13,95 Teilen Anilin versetzt wird. Es bildet sich langsam eine klare Lösung, die nach 2 Stunden beim Abkühlen kristallin erstarrt. Dann wird die Reaktionsmischung mit 140 Teilen Wasser verdünnt, auf 60° erwärmt und so lange gerührt, bis eine klare Lösung entsteht. Durch Zugabe von Eis wird auf 5° abgekühlt. Anschliessend werden 16,8 Teile Natriumhydrogencarbonat zugegeben.

In einem zweiten Schritt werden in einem separaten Reaktionskolben 63,3 Teile einer Verbindung, die in Form der freien Säure der Formel

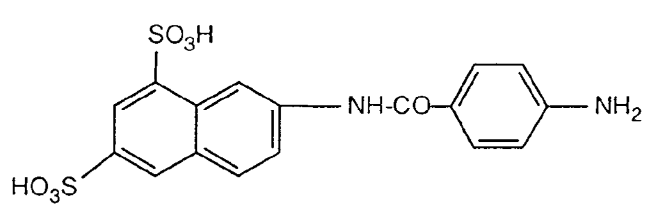

(101)

entspricht, in 150 Teilen Wasser mit konzentrierter wässriger Natriumhydroxid-Lösung bei pH 7,5 gelöst und daraufhin mit 37,5 Teilen einer 4-normalen Natriumnitrit-Lösung versetzt. Die Reaktionsmischung wird auf eine vorgelegte Mischung von 150 Teilen Eis und 37,5 Teilen einer ca. 32%-igen Salzsäure-Lösung getropft. Die so erhaltene Diazosuspension wird der im ersten Schritt erhaltenen Lösung zugegeben. Die Kupplung wird nun bei einem pH-Wert von 6,5 bis 7, welcher durch Zugabe von 4,5 Teilen Natriumhydrogencarbonat gehalten wird, und einer Temperatur von 48 bis 50° ausgeführt. Man erhält 915 Teile einer Lösung, welche das Reaktionsprodukt, welches in Form der freien Säure der Verbindung der Formel

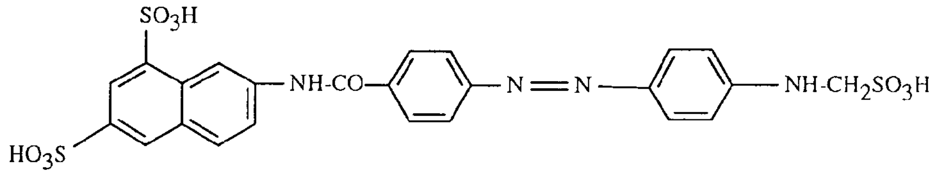

(102)

entspricht, enthält.

Anschliessend werden 915 Teile der wie oben angegeben erhaltenen Lösung bei Raumtemperatur mit 80 Teilen Natriumhydroxid (98%) versetzt. Man lässt ca. 2 Stunden bei Raumtemperatur nachrühren und stellt anschliessend den pH mittels ca. 40%-iger Essigsäure auf einen Wert von 10. Nach Zugabe von Natriumchlorid und Filtration wird das feuchte Reaktionsprodukt in 150 Teilen Wasser bei einem pH-Wert von 11,5 gelöst. Nach Zugabe von Natriumchlorid wird filtriert und im Vakuum bei einer Temperatur von 50 bis 60° getrocknet. Man erhält 30 Teile eines Reaktionsprodukts, das in Form der freien Säure der Verbindung der Formel

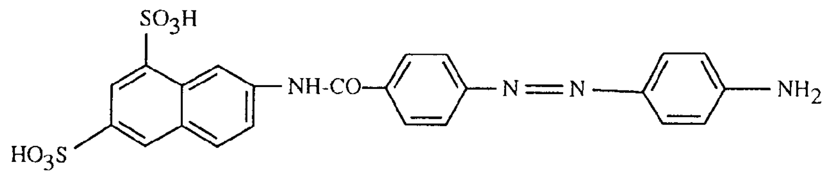

(103)

entspricht.

5,26 Teile der wie oben angegeben erhaltenen Verbindung der Formel (103) werden in 75 Teile Wasser unter Zugabe von verdünnter wässriger Natriumhydroxid-Lösung bei pH 8 bis 9 gelöst und mit 2,5 Teilen einer 4-normalen wässrigen Natriumnitritlösung versetzt. Die dünnflüssige, auf eine Temperatur von 55° erwärmte Suspension wird auf eine vorgelegte Mischung von 75 Teilen Eis und 3 Teilen einer ca. 32%-igen Salzsäure-Lösung getropft. Die Reaktionsmischung wird anschliessend 30 Minuten nachgerührt und unter Einhaltung eines pH-Wertes von ca. 10,5 und einer Temperatur von 13 bis 20° zu einer vorgelegten Lösung gegeben. Die vorgelegte Lösung wird zuvor durch Lösen von 1,44 Teilen 2-Naphtol in 100 Teilen warmem Wasser, unter Zugabe von 6 Teilen 2-normaler wässriger Natriumhydroxid-Lösung und anschliessender Abkühlung auf eine Temperatur von 20° hergestellt. Nach beendeter Kupplung werden der so erhaltenen Reaktionsmischung 250 Teile Alkohol (95%) zugesetzt, der ausgefällte Farbstoff bei einer Temperatur von 35° abfiltriert, mit verdünnter wässriger Natriumchlorid-Lösung und Alkohol gewaschen und im Vakuum bei einer Temperatur von 50 bis 60° getrocknet. Man erhält 6,34 Teile eines Farbstoffs, der in Form der freien Säure der Verbindung der Formel

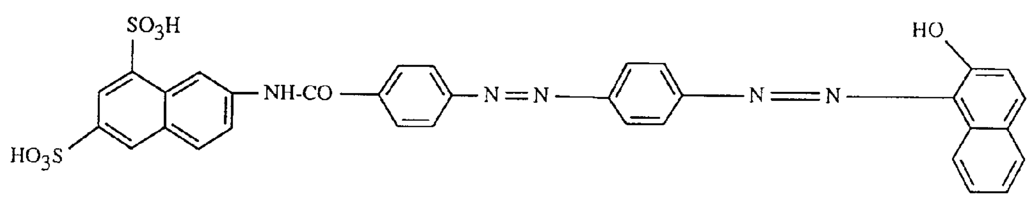

(104)

entspricht. Der Farbstoff der Formel (104) färbt natürliches und synthetisches Polyamidfasermaterial in roten Farbtönen.

Beispiele 2 bis 35:

Verfährt man wie in Beispiel 1 angegeben, verwendet jedoch statt 63,3 Teile der Verbindung der Formel (101) eines der in der folgenden Tabelle in Spalte 2 in Form der freien Säure angegebenen Amins, so erhält man analoge Farbstoffe, die natürliches und synthetisches Polyamidfasermaterial in roten Farbtönen färben.

Tabelle

| Bsp. | Amin |
| --- | --- |
| 2 | 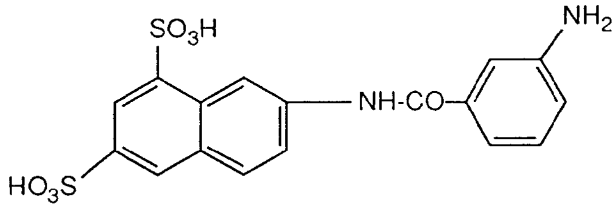 |
| 3 | 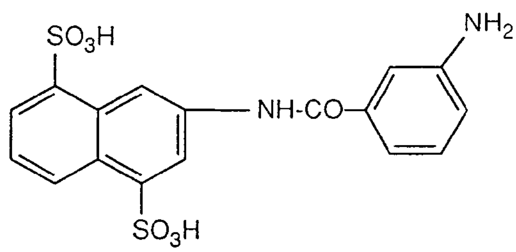 |
| 4 | 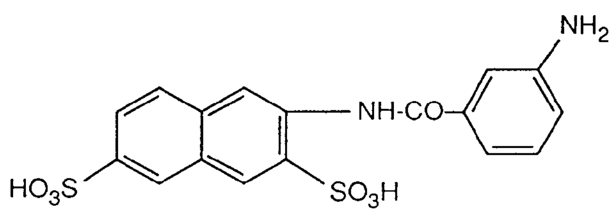 |
| 5 | 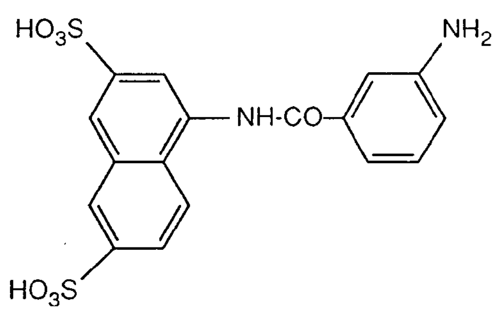 |

6

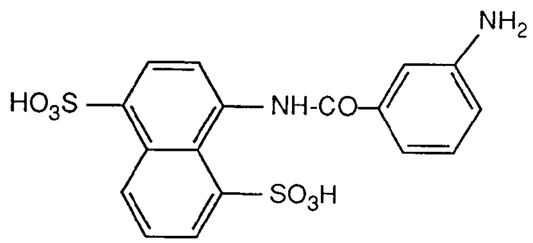

7

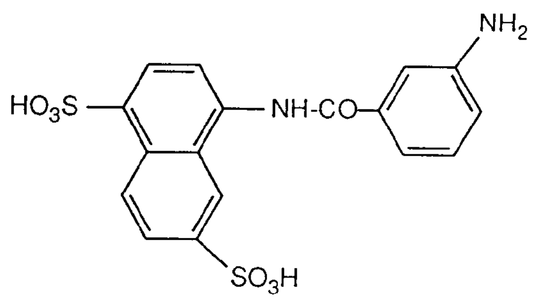

8

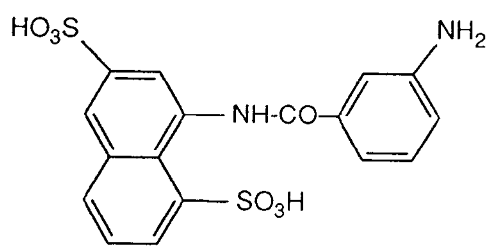

9

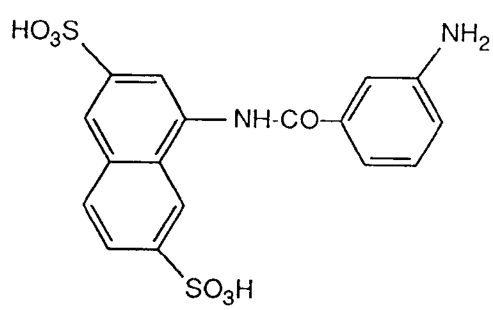

10

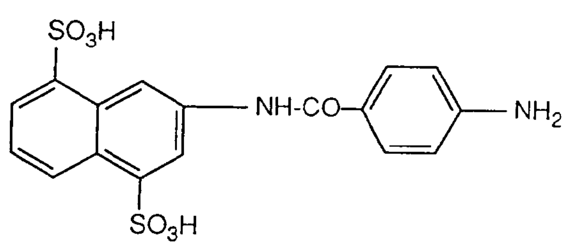

11 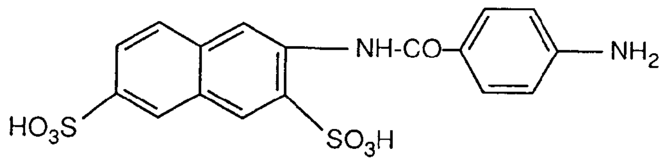

12 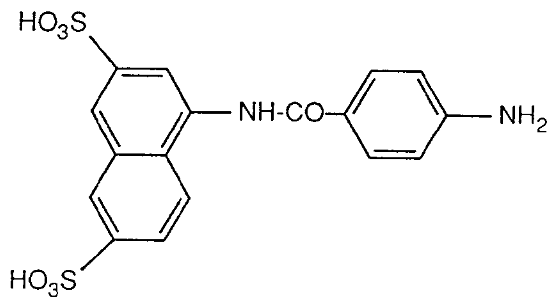

13 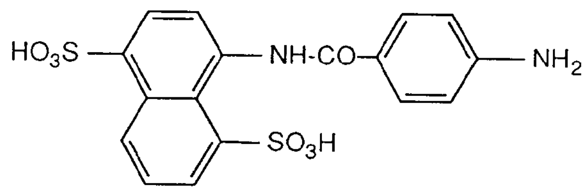

14 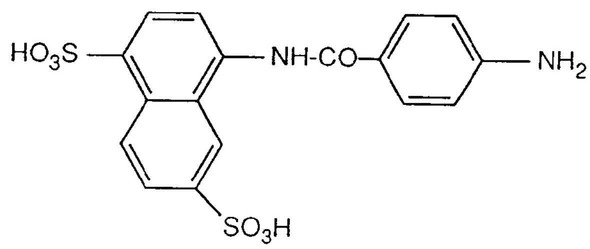

15 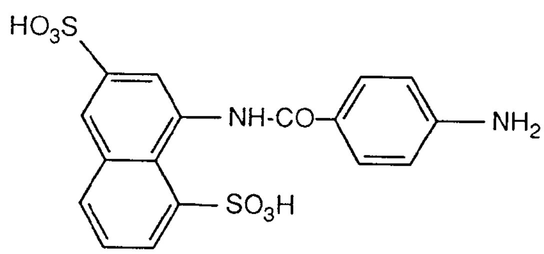

16

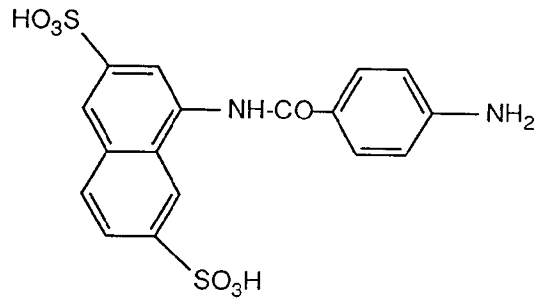

17

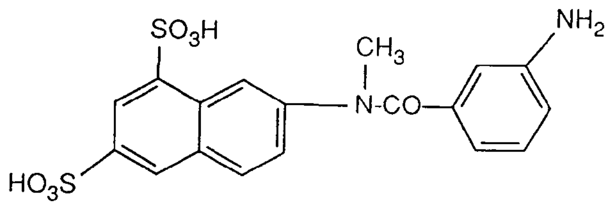

18

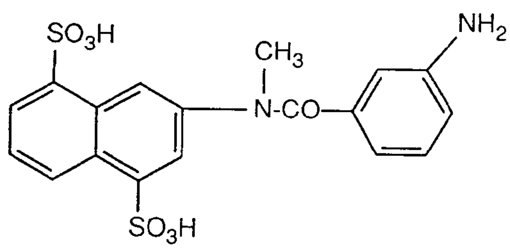

19

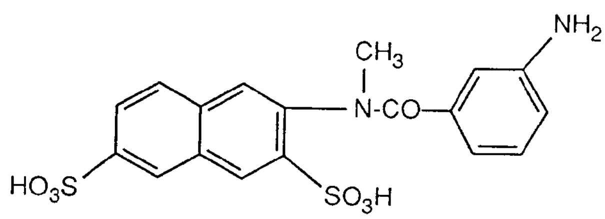

20

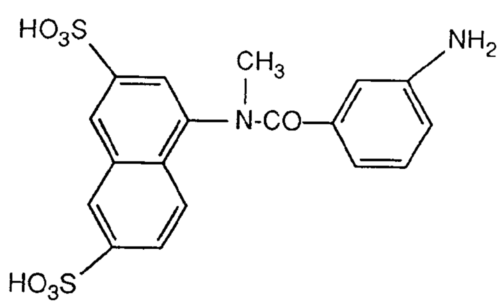

21 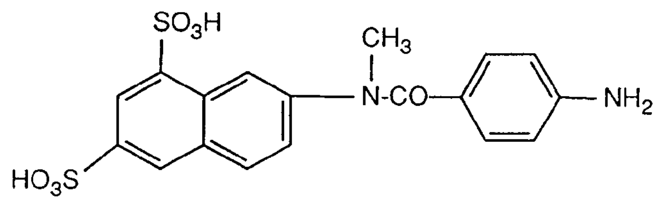

22 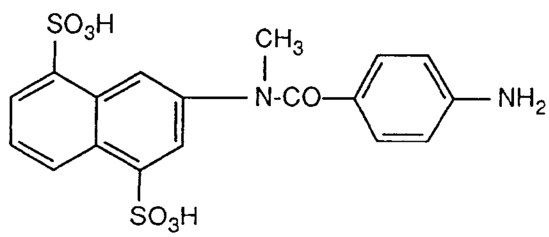

23 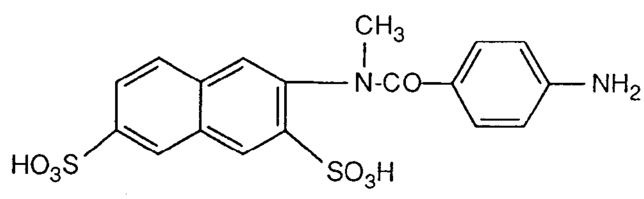

24 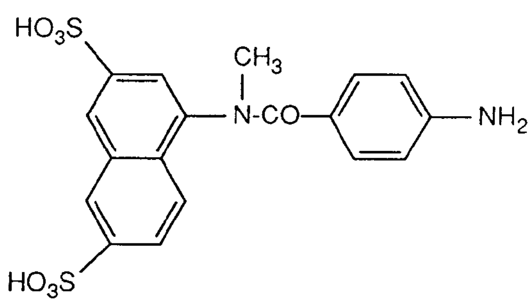

25 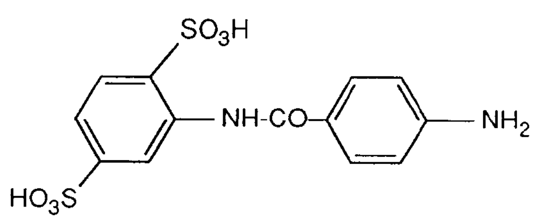

26 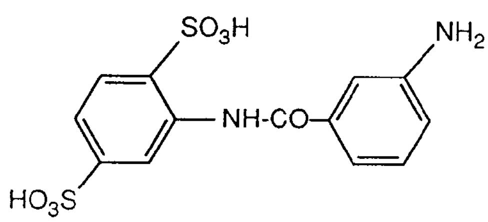

27 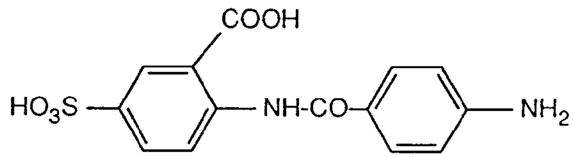

28 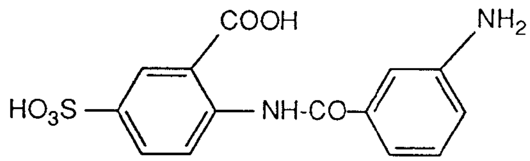

29 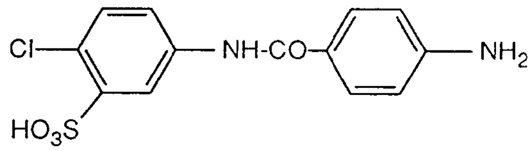

30 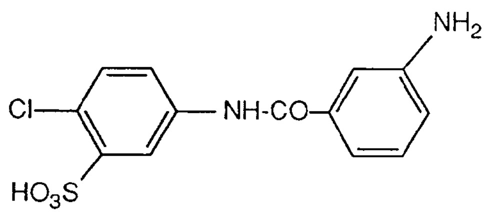

31 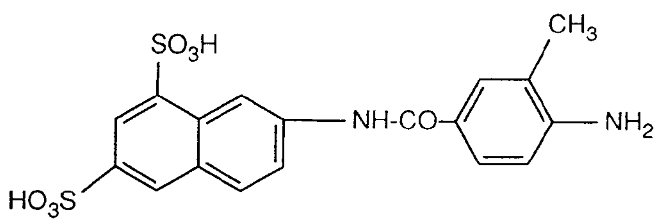

32 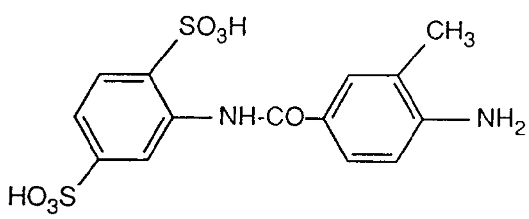

33 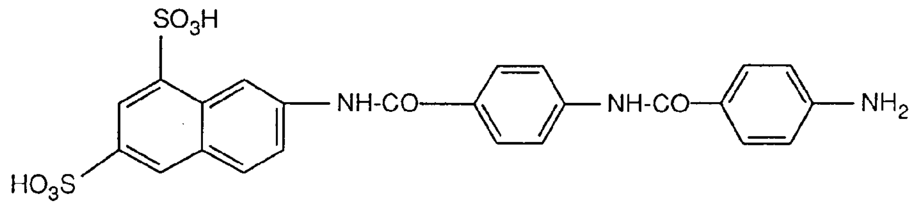

34 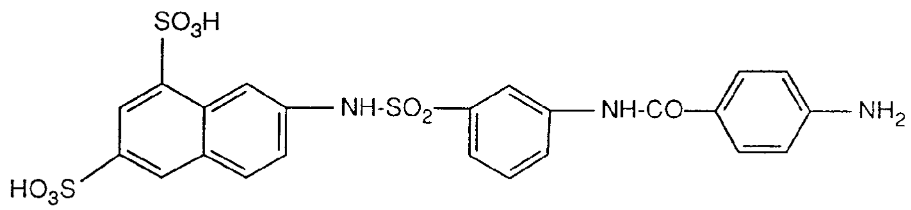

35 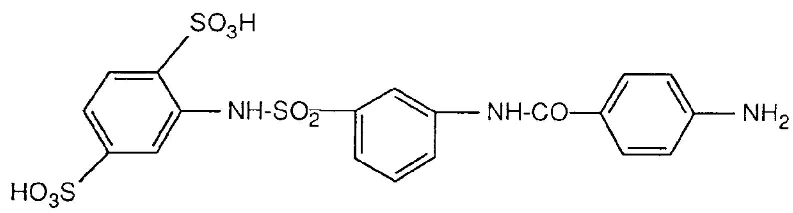

Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,6 % bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein rot gefärbtes Polyamid-6,6-Gewebe, das eine reine Nuance und gute Gesamtechtheiten aufweist.

Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 2 beträgt 1,1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein rot gefärbtes Polyamid-6,6-Gewebe, das eine reine Nuance und gute Gesamtechtheiten aufweist.

Färbevorschrift III

Man färbt 10 Teile Wollstück in 500 Teilen einer wässrigen Flotte. Bezogen auf das Fasergewicht betragen die Anteile an Farbstoff 0,55 % gemäss Beispiel 1, an Glaubersalz kalz. 5 % und 80%-iger Essigsäure 2 %. Die Färbedauer bei einer Temperatur von 98° beträgt 30-60 Minuten. Das rot gefärbte, wie üblich gewaschene und getrocknete Wollstück weist sehr gute Allgemeinechtheiten auf.

Färbevorschrift IV

100 Teile Bekleidungsveloursleder werden bei 50° in einer Lösung von 1000 Teilen Wasser und 2 Teilen 24%-igem Ammoniak während 2 Stunden aufgewalkt und anschliessend bei 60° in einer Lösung von 1000 Teilen Wasser, 2 Teilen 24%-igem Ammoniak und 3 Teilen Farbstoff gemäss dem Beispiel 1 während 1 Stunde

gefärbt. Hierauf gibt man eine Lösung von 40 Teilen Wasser und 4 Teilen 85%-iger Ameisensäure zu und färbt noch weitere 30 Minuten. Dann werden die Leder gut gespült und gegebenenfalls noch mit 2 Teilen eines Dicyandiamid-Formaldehydkondensationsproduktes während 30 Minuten bei 50° behandelt. Man erhält eine rote Färbung mit guten Echtheiten.

Druckbeispiel (Stoffdruck)

Gewebtes Polyamid 6 oder Polyamid 6.6-Fasermaterial wird auf einer herkömmlichen Textildruckmaschine mit einer Paste bedruckt, die bezogen auf 1000 g Druckpaste enthält:

a) 20 g des Farbstoffes gemäss Beispiel 1,
b) 50 g Harnstoff,
c) 50 g Thiodiäthylenglykol,
d) 320 g Wasser,
e) 500 g Kernmehl- oder Guarmehlderivat, 10%-ig und
f) 60 g Ammontartrat-Lösung 15 Bè.

Die bedruckte Ware wird im Trockenschrank bei 70 bis 80° getrocknet und dann 20 bis 30 Minuten mit Sattdampf von 101 bis 103° gedämpft. Anschliessend wird die Ware 10 Minuten kalt gespült, 15 Minuten bei 50 bis 60° mit 2 g/l eines synthetischen Waschmittels gewaschen, erneut kalt gespült und dann getrocknet. Man erhält einen gleichmässigen Druck in roter Nuance, mit scharfen Konturen und guten Echtheiten.

Zur Beurteilung der Feinverteilung wird die Druckpaste in verdünnter Form aufgebracht. Das bedruckte Material erweist sich dabei als sprickelfrei.

## Patentansprüche

1. Azofarbstoffe der Formel

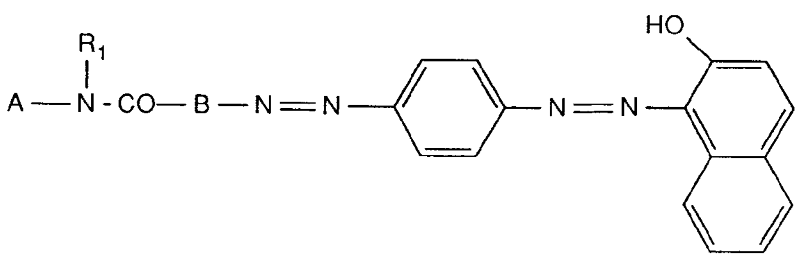

(1),

worin $R_1$ Wasserstoff oder $C_1$-$C_8$-Alkyl, B gegebenenfalls substituiertes Phenylen oder Naphthylen ist und A einen Rest der Formel

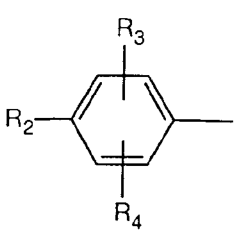

(2),

worin $R_2$, $R_3$ und $R_4$ unabhängig voneinander Wasserstoff, $C_1$-$C_8$-Alkyl, $C_1$-$C_8$-Alkoxy, Halogen, Carboxy oder gegebenenfalls durch $C_1$-$C_4$-Alkyl, $C_1$-$C_4$-Alkoxy, Halogen, Carboxy oder Sulfo weitersubstituiertes Phenylaminosulfonyl, Naphthylaminosulfonyl, Phenylaminocarbonyl oder Naphthylaminocarbonyl sind und $R_3$ und $R_4$ zusätzlich Sulfo bedeuten können,
oder einen Rest der Formel

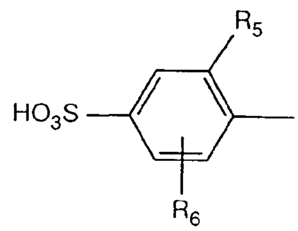

(3),

worin $R_5$ $C_1$-$C_8$-Alkoxy, Halogen, Carboxy oder Sulfo und $R_6$ Wasserstoff. $C_1$-$C_8$-Alkyl, $C_1$-$C_8$-Alkoxy, Halogen, Carboxy oder Sulfo ist,
oder einen Rest der Formel

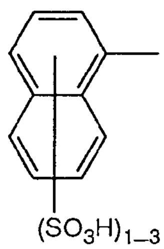

(4)

oder einen Rest der Formel

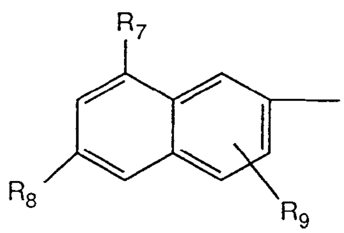

(5),

worin $R_7$, $R_8$ und $R_9$ unabhängig voneinander Wasserstoff oder Sulfo sind, bedeutet.

2. Azofarbstoffe gemäss Anspruch 1, worin B gegebenenfalls durch $C_1$-$C_8$-Alkyl, $C_1$-$C_8$-Alkoxy, Halogen, Carboxy oder Sulfo substituiertes Phenylen ist.

3. Azofarbstoffe gemäss einem der Ansprüche 1 und 2, worin $R_1$ Wasserstoff, Methyl oder Aethyl, insbesondere Wasserstoff, ist.

4. Azofarbstoffe gemäss einem der Ansprüche 1 bis 3, worin $R_2$ Wasserstoff, Halogen oder gegebenenfalls durch Sulfo weitersubstituiertes Phenylaminosulfonyl, Naphthylaminosulfonyl, Phenylaminocarbonyl oder Naphthylaminocarbonyl ist und $R_3$ und $R_4$ unabhängig voneinander Wasserstoff, Sulfo oder gegebenenfalls durch Sulfo weitersubstituiertes Phenylaminosulfonyl, Naphthylaminosulfonyl, Phenylaminocarbonyl oder Naphthylaminocarbonyl sind.

5. Azofarbstoffe gemäss einem der Ansprüche 1 bis 4, worin $R_2$ Wasserstoff oder Halogen ist und $R_3$ und $R_4$ unabhängig voneinander Wasserstoff oder Sulfo sind.

6. Azofarbstoffe gemäss einem der Ansprüche 1 bis 5, worin A einen Rest der Formel (2), (4) oder (5) bedeutet.

7. Azofarbstoffe gemäss Anspruch 1, der Formel

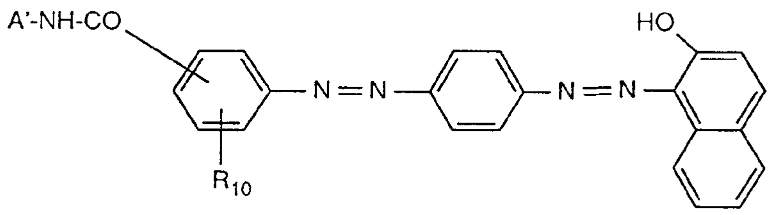

(6),

worin $R_{10}$ Wasserstoff oder Methyl ist und A' einen Rest der Formel

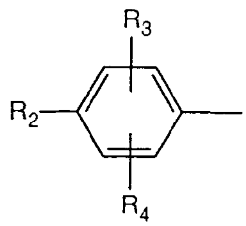

(2),

worin $R_2$ Wasserstoff oder Halogen ist und $R_3$ und $R_4$ unabhängig voneinander Wasserstoff oder Sulfo sind,
oder einen Rest der Formel

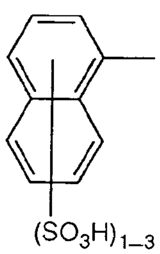

(4)

oder einen Rest der Formel

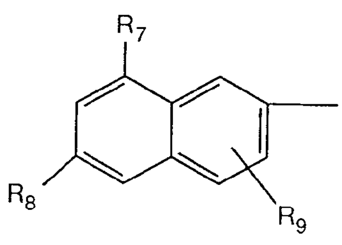

(5),

worin $R_7$, $R_8$ und $R_9$ unabhängig voneinander Wasserstoff oder Sulfo sind, bedeutet.

8. Azofarbstoffe gemäss Anspruch 7, worin A' ein Rest der Formel (4) oder (5), insbesondere ein Rest der Formel (5), ist.

9. Azofarbstoffe gemäss einem der Ansprüche 1 bis 8, worin der Farbstoff der Formel (1) eine oder zwei Sulfogruppen, insbesondere zwei Sulfogruppen, enthält.

10. Verfahren zur Herstellung von Azofarbstoffen gemäss Anspruch 1, dadurch gekennzeichnet, dass man ein Amin der Formel

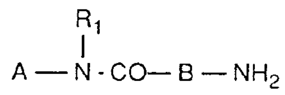

(7),

worin A, B und $R_1$ die in Anspruch 1 angegebenen Bedeutungen haben, diazotiert und auf eine Verbindung der Formel

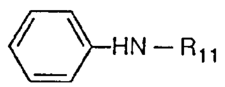

(8),

worin $R_{11}$ Wasserstoff oder $-CH_2-SO_3H$ ist, kuppelt, und das so erhaltene Produkt, falls $R_{11}$ $-CH_2SO_3H$ ist, zur Verbindung der Formel

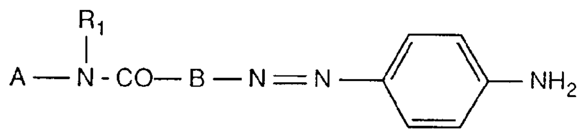

(9)

umsetzt, die Verbindung der Formel (9) diazotiert und auf eine Verbindung der Formel

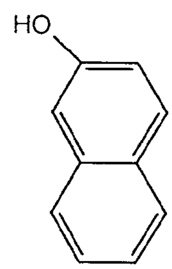

(10)

kuppelt.

**11.** Verwendung der Azofarbstoffe gemäss den Ansprüchen 1 bis 9 bzw. der gemäss Anspruch 10 erhaltenen Azofarbstoffe zum Färben und Bedrucken von stickstoffllaltigen oder hydroxygruppenhaltigen Fasermaterialien, Papier oder Leder.

Europäisches Patentamt

# EUROPÄISCHER RECHERCHENBERICHT

Nummer der Anmeldung
EP 93 81 0305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | CH-A-1700/90 (CIBA-GEIGY AG)<br>Dieses Prioritätsdokument gehört zu der Akte EP91810357.3 (Teil 3) entsprechend der am 21.11.91 veröffentlichen Anmeldung EP-A-0457729. Daher wird es auch als der Allgemeinheit zugänglich und dem Stand der Technik zugehörend betrachtet.<br>* Ansprüche 1-6,10,11; Beispiele 52-56,67,68 *<br>--- | 1-11 | C09B31/072 |
| L | EP-A-0 457 729 (CIBA-GEIGY AG)<br>siehe Seite 1, Punkt 30 (Priorität) und Punkt 43 (Veröffentlichungstag der Anmeldung)<br>----- | | |

| RECHERCHIERTE SACHGEBIETE (Int. Cl.5 ) |
|---|
| C09B |

Der vorliegende Recherchenbericht wurde für alle Patentansprüche erstellt

| Recherchenort | Abschlußdatum der Recherche | Prüfer |
|---|---|---|
| DEN HAAG | 26 AUGUST 1993 | GINOUX C.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)